# EUROPEAN PATENT APPLICATION

(11) **EP 3 219 286 A1**
(43) Date of publication of application: **20.09.2017**
(21) Application number: 16796793.4
(22) Date of filing: 19.05.2016
(51) Int. Cl.: A61C 8/00

(54) **ABUTMENT AND CROWN COUPLING STRUCTURE FOR IMPLANT**

(30) Priority: 19.05.2015 KR 20150069504
(71) Applicant: Yesbio Gold Co., Ltd., Seoul 03693 (KR); Kim, Tae Eung, Seoul 02612 (KR)
(72) Inventor: KIM, Tae Eung, Seoul 02612 (KR)
(74) Representative: Gulde & Partner
(86) International application number: PCT/KR2016/005327
(87) International publication number: WO 2016/186466

(57) **Abstract**

The present invention relates to a coupling structure between an abutment and a crown for an implant. To this end, the present invention relates to a coupling structure between an abutment and a crown for an implant, the structure having a lower part of an abutment facing and coupled to, by a bolt, the upper part of a fixture coupled to a tooth-extraction hole of the alveolar bone, and having a lower part of a crown inserted into and coupled to the upper part of the abutment, wherein the abutment has: a support stepped part formed along the edge at the lower part of an abutment body having a stepped hole; a crown supporting guide formed along the edge of the abutment body from the inner upper part of the support stepped part; and an inclined groove part formed at the upper part of the abutment body, and the crown has: an abutment insertion groove, of which the lower side is open, formed at a crown body; a hanging stepped part formed at the edge of an inlet side of the abutment insertion groove; a shock-absorbing layer provided on the inner surface of the abutment insertion groove; and an inclined protrusion part integrally formed at the bottom surface of the inner upper part of the abutment insertion groove. Therefore, the present invention can prevent shock from being transmitted to the abutment through the crown, thereby minimizing a feeling of unfamiliarity, and can reuse the implant since only the resin inserted into a contact part of the crown is separated and new resin is filled therein.

## Description

### [Technical Field]

The present invention relates to a coupling structure between an abutment and a crown for an implant, and particularly, an abutment insertion groove formed at a crown body that has an impact-absorbing layer is fitted and coupled to an abutment coupled to an upper part of a fixture by a bolt so that an impact is prevented from being transmitted thereto, and a contact part formed of a resin is disposed at one side or both sides of a crown so that a space between a tooth and another neighboring tooth is prevented from being changed.

### [Background Art]

Generally, an implant allows original functions of a tooth to be restored by an artificial tooth root formed of a material that is not rejected by the human body being implanted in and integrated with an alveolar bone from which a tooth is lost and then an artificial tooth being fixed thereto with a connecting column.

In an implant placement procedure, an artificial tooth root that is integrated with an alveolar bone from which a tooth is lost, a connecting column that has one end of the artificial tooth root accommodated therein so that the artificial tooth root is engaged with each part thereof and is prevented from rotating, a screw that is accommodated in the connecting column and screw-coupled to the artificial tooth root, and an artificial tooth that is bound to a distal end of the connecting column are placed in a predetermined order.

The connecting column that supports the artificial tooth has an inclined surface formed at a part thereof accommodated in the artificial tooth root, and the inclined surface is bound by the screw in a state of being tightly engaged with the artificial tooth root. Accordingly, because the inclined surface tightly engaged with the artificial tooth root is not easily separated even when the screw is separated from the artificial tooth root, a considerable time is taken for separating the connecting column when the artificial tooth needs to be replaced, and there is a problem in that a procedure time is delayed.

Such an artificial tooth is obtained by the following process. After a plaster model fabricated by a dental impression mold is cut through a pin-work process, a wax model that has a form and size of an artificial tooth to be formed through a wax-up process is obtained, an investment process in which, when an investment material that surrounds the wax model is hardened, the wax model is physically removed from the investment material and a casting mold is formed is performed, a solution is injected into the casting mold to form the artificial tooth by casting, and a polishing process in which oxides are removed from a surface of the cast artificial tooth is performed.

The artificial tooth obtained by the above process is fixed to the connecting column by screw-fastening or cement to place an implant.

However, in the casting of an artificial tooth, when a dental impression mold is created in a patient's oral cavity, an error occurs because it is actually difficult for a dental impression mold that is exactly the same as reality to be created. Such an error also occurs in all subsequent processes including model fabrication, the pin-work process, the wax-up process, the investment process and casting, and the polishing process, and because compatibility and passivity are not secured, there is a problem in that the artificial tooth is detached after the implant is placed.

Also, because a large amount of time is taken due to a complicated process in which an artificial tooth is fabricated by casting, there is another problem in that an inconvenience is caused to a patient.

Also, the artificial tooth is coupled to the connecting column by a screwing method or a cementing method. The screwing method has a problem in that, when biting repeatedly occurs after the implant is placed, the screw is gradually loosened or broken by a lateral force and an occlusal force (vertical pressure, lateral pressure, and rotational pressure) acting on the artificial tooth, and the cementing method has a problem in that repair/correction or placement of an implant for other adjacent teeth is difficult after the implant is placed.

To solve the above problem, the functional implants of Korean Patent Registration No. 10-1253498 (April 5, 2013) and the air crown for implant abutments of Korean Patent Registration No. 10-1514723 (April 17, 2015) have been proposed. However, in a process of coupling a crown to an abutment, there is a problem in that the process is cumbersome because a process of aligning the centers thereof takes time.

Also, there are other problems in that workability is decreased and costs are increased because a large amount of time is taken for a process of forming an impact-absorbing layer inside a crown.

Also, because a crown abuts one side or both sides of another neighboring crown, there is still another problem in that, when a tooth is deformed or a deformation and a cavity is caused by partial wear, costs increase in a process of replacing an existing crown with a new crown without reusing the crown.

### [Disclosure]

### [Technical Problem]

The present invention is directed to improve workability by allowing a crown to be easily coupled to an abutment, shorten a process of forming an impact-absorbing layer inside the crown, and, when a part at which the crown abuts one side or both sides of another crown is partially deformed or decayed, allow only the deformed part to be replaced to reduce costs.

### [Technical Solution]

The present invention relates to a coupling structure between an abutment and a crown for an implant in which a lower part of an abutment (10) abuts and is coupled to an upper part of a fixture (30) that is coupled to a tooth-extraction hole of an alveolar bone by a bolt (B), and a lower part of a crown (20) is fitted and coupled to an upper part of the abutment (10), wherein the abutment (10) has a support step (12) formed along an edge of a lower part of an abutment body (11) in which a step hole (101) is formed, a crown support guide (13) formed along an edge of the abutment body (11) from an inner upper part of the support step (12), and an inclined groove part (14) formed at an upper part of the abutment body (11), and the crown (20) has an abutment insertion groove (211) with an open lower part formed in a crown body (21), a locking step (22) formed at an inlet-side edge of the abutment insertion groove (211), an impact-absorbing layer (23) disposed at an inner surface of the abutment insertion groove (211), and an inclined protrusion (24) integrally formed with a lower surface of an inner upper part of the abutment insertion groove (211).

The support step (12) may have a fitting part (122) disposed at an edge of a horizontal part (121), and the fitting part (122) may be formed so that a lower angle of inclination (α) toward an inside of the abutment body (11) with respect to a vertical direction is in a range of 0 to 6°, and a lower part height (H) is in a range of 1 to 2 mm.

The crown support guide (13) may have a width (W) that gradually narrows in an upward direction from a lower part at which the support step (12) is formed, and the width (W) may be formed so that an upper angle of inclination (α') toward the inside of the abutment body (11) with respect to a vertical direction is in a range of 0 to 6°, and an upper part height (H') is in a range of 2 to 4 mm.

The crown (20) may be formed of zirconia, the impact-absorbing layer (23) may have a fine concave-convex layer (231) formed by etching at an inner surface of the abutment insertion groove (211), a primer layer (232) may be formed by a primer being applied to the fine concave-convex layer (231), and a resin layer (233) may be applied to the primer layer (232).

The impact-absorbing layer (23) may have the same width (W) as the width (W) of the crown support guide (13).

The crown (20) may have a contact part (25) formed at a part at which the crown (20) abuts another neighboring crown, the contact part (25) may have a contact insertion groove (251) that is formed in the crown (20) by etching, and a contact resin (252) may be inserted into the contact insertion groove (251).

### [Advantageous Effects]

By allowing an abutment insertion groove formed in a crown body having an impact-absorbing layer to be simply fitted and coupled to an abutment that is coupled to an upper part of a fixture by a bolt, the present invention can prevent an impact from being transmitted, thereby minimizing a feeling of unfamiliarity.

By shortening a fabrication process of an impact-absorbing layer formed inside a crown, productivity can be improved, thereby reducing costs.

By disposing a contact part formed of resin at one side or both sides of a crown in a process in which an implant is used, a change in a space between a tooth and another neighboring tooth due to deformation and a cavity caused by wear or other reasons can be prevented.

Further, when a space is generated between teeth in a process in which an implant is used, a crown can be reused by removing only an existing resin filled in a contact part and filling a new resin therein without replacing the entire crown of the implant.

### [Description of Drawings]

FIG. 1 is a perspective view illustrating a state in which an abutment and a crown for an implant are coupled to a tooth-extraction hole of an alveolar bone according to the present invention.
FIG. 2 is a longitudinal cross-sectional view illustrating a coupling structure between an abutment and a crown for an implant according to the present invention.
FIG. 3 is an exploded longitudinal cross-sectional view illustrating the coupling structure between the abutment and the crown for an implant according to the present invention.
FIG. 4 is a longitudinal cross-sectional view illustrating the state in which the abutment and the crown for an implant are coupled to the tooth extraction hole of the alveolar bone according to the present invention.

### [Modes of the Invention]

Embodiments of the present invention will be described below with reference to the accompanying drawing.

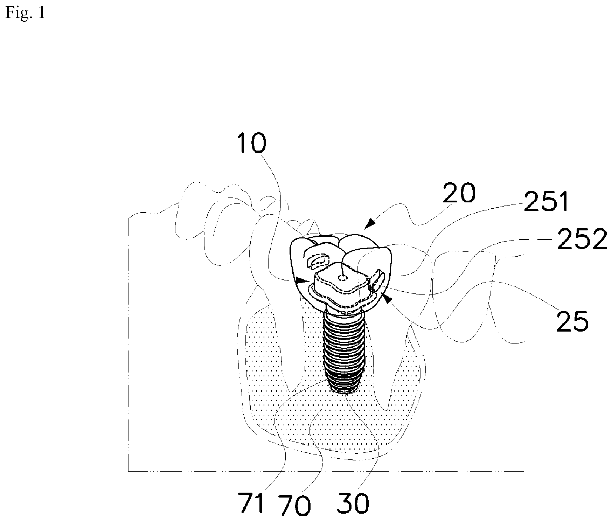

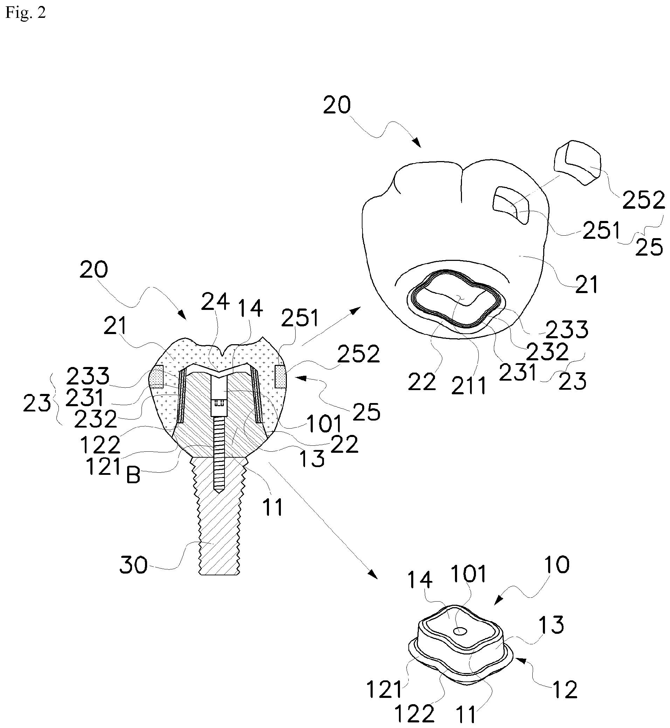

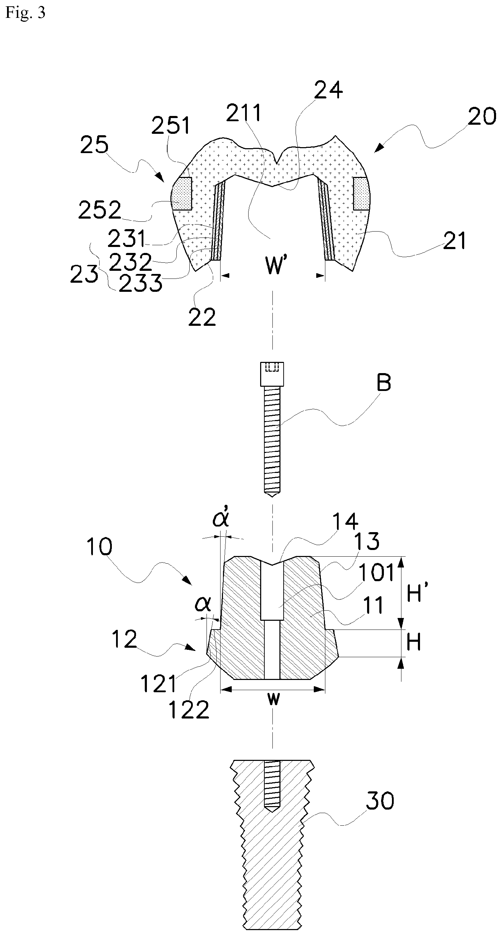

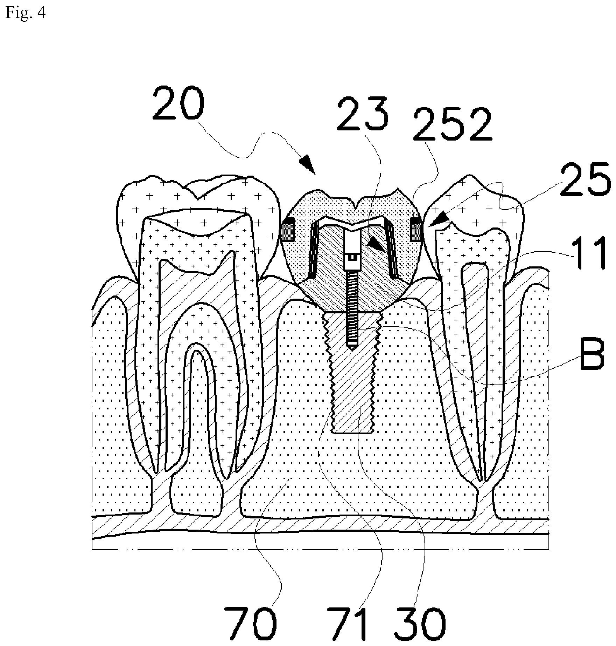

FIG. 1 is a perspective view illustrating a state in which an abutment and a crown for an implant are coupled to a tooth-extraction hole of an alveolar bone according to the present invention, FIG. 2 is a longitudinal cross-sectional view illustrating a coupling structure between an abutment and a crown for an implant according to the present invention, FIG. 3 is an exploded longitudinal cross-sectional view illustrating the coupling structure between the abutment and the crown for an implant according to the present invention, and FIG. 4 is a longitudinal cross-sectional view illustrating the state in which the abutment and the crown for an implant are coupled to the tooth extraction hole of the alveolar bone according to the present invention.

As illustrated in FIGS. 1 to 4, with respect to the abutment and the crown for an implant according to the present invention, a fixture 30 is screw-coupled to a tooth-extraction hole 71 of an alveolar bone 70, and a lower part of an abutment 10 abuts and is coupled to an upper part of the screw-coupled fixture 30 by a bolt B so that a lower part of a crown 20 is simply fitted and coupled to an upper part of the abutment 10.

Here, the abutment 10 includes a step hole 101 that extends in a vertical direction formed to pass through the center of an abutment body 11 so that the abutment 10 can be coupled to the upper part of the fixture 30 by the bolt B.

A support step 12 is formed along an edge of a lower part of the abutment body 11 so that a lower end of a crown body 21 can be stably supported thereby.

The support step 12 has a fitting part 122 disposed at an edge of a horizontal part 121 so that a load acting thereon from above and a load acting thereon from an upper lateral side can be stably supported.

For this, it is preferable for the fitting part 122 to have 0 to 6° as a lower angle of inclination α toward an inside of the abutment body 11 with respect to a vertical direction and 1 to 2 mm as a lower part height H.

It is more preferable for the fitting part 122 to have a vertical slope when the lower angle of inclination α is 0°, and for the fitting part 122 to have a tapered form when the lower angle of inclination α is 6° so that the lower angle of inclination α of the fitting part 122 can vary according to a size of the crown 20. Here, when the lower angle of inclination α is larger than 0°, the crown 20 can be easily coupled to the fitting part 122 due to a tapered form thereof, and the center of the abutment 10 and the center of the crown 20 can be automatically aligned.

The abutment body 11 includes a crown support guide 13 formed along an edge from an inner upper part at which the support step 12 is formed so that an abutment insertion groove 211 formed at an inner lower part of the crown body 21 is stably inserted therein and adherence to an impact-absorbing layer 23 is maintained.

The crown support guide 13 has a function that enables an inside of the crown body 21 to be stably supported and has a width W that narrows in an upward direction from the lower part at which the support step 12 is formed to facilitate coupling.

Here, the width W is formed so that an upper angle of inclination α' toward the inside of the abutment body 11 with respect to the vertical direction is in a range of 0 to 6°, and an upper part height H' is in a range of 2 to 4 mm.

An inclined groove part 14 having an inclined angle that decreases toward the center of the step hole 101 is formed at an upper part of the abutment body 11, and a predetermined space is maintained between the inclined groove part 14 and an inclined protrusion 24 formed at an upper part of the abutment insertion hole 211 of the crown body 21 so that a vacuum space can be maintained.

The crown 20 has the crown body 21 formed using zirconia to have the abutment insertion groove 211 with an open lower part and a locking step 22 formed at an inlet-side edge of the abutment insertion groove 211 to be stably supported by the support step 12.

The impact-absorbing layer 23 is disposed at an inner surface of the abutment insertion groove 211 to prevent an impact generated in a process of chewing food from being transmitted through the abutment 10 and the fixture 30.

The impact-absorbing layer 23 is etched in the inner surface of the abutment insertion groove 211 using an etching solution so that a fine concave-convex layer 231 is formed on a surface thereof and an adhesive strength of a primer layer 232 can be improved.

The primer layer 232 on which a primer having a predetermined thickness is applied is formed on the fine concave-convex layer 231, and hardening can be performed in the state in which a resin layer 233 having a predetermined thickness is applied to the primer layer 232. Here, the impact-absorbing layer 23 is formed to have the same width W' as a width W of the crown support guide 13 to be prevented from moving while being fitted and coupled.

The inclined protrusion 24 having the same shape as the inclined groove part 14 formed at the upper part of the abutment body 11 may be integrally formed with a lower surface of an inner upper part of the abutment insertion groove 211.

The crown 20 includes a contact part 25 formed at a part at which the crown 20 abuts another crown so that the crown 20 is prevented from being locally deformed.

The contact part 25 includes a contact insertion groove 251 disposed in the crown 20, and hardening can be performed in the state in which a contact resin 252 is inserted into the contact insertion groove 251 when an inner surface of the contact insertion groove 251 is corroded by etching and fine protrusions are formed thereon. Here, it is preferable for an adhesive strength of the contact resin 252 to be further reinforced by a primer being applied to the corroded surface corroded by etching.

With respect to the above abutment and crown for an implant, first, screw threads formed at an outside of the fixture 30 are coupled to the tooth-extraction hole 71 formed in the alveolar bone 70, and then the lower part of the abutment body 11 is placed on the upper part of the fixture 30.

Then, the abutment body 10 is screw-coupled to the fixture 30 by the bolt B passing through the step hole 101.

Next, an implant is placed thereon by the abutment insertion groove 211 formed in the crown body 21 being inserted from the upper part to the lower part of the abutment body 11. Here, by the impact-absorbing layer 23 formed at an inner wall surface of the abutment insertion hole 211 of the crown body 21 abutting the crown support guide 13, movement can be prevented, and an impact generated in a process of chewing food can be prevented from being transmitted to the abutment body 11.

When a deformation occurs in the contact part 25 which is the part at which the crown 20 abuts another neighboring crown in a process in which the implant is used, the crown 20 is separated from the abutment body 11, the contact resin 252 filled in the deformed contact part 25 is removed, a new contact resin is press-fitted into the contact part 25 and hardened, and the crown 20 is fitted again to the abutment body 11 so that the crown 20 is reusable.

## Claims

1. A coupling structure between an abutment and a crown for an implant in which a lower part of an abutment (10) abuts and is coupled to an upper part of a fixture (30) that is coupled to a tooth-extraction hole of an alveolar bone by a bolt (B), and a lower part of a crown (20) is fitted and coupled to an upper part of the abutment (10), wherein:
the abutment (10) has a support step (12) formed along an edge of a lower part of an abutment body (11) in which a step hole (101) is formed, a crown support guide (13) formed along an edge of the abutment body (11) from an inner upper part of the support step (12), and an inclined groove part (14) formed at an upper part of the abutment body (11), and the crown (20) has an abutment insertion groove (211) with an open lower part formed in a crown body (21), a locking step (22) formed at an inlet-side edge of the abutment insertion groove (211), an impact-absorbing layer (23) disposed at an inner surface of the abutment insertion groove (211), and an inclined protrusion (24) integrally formed with a lower surface of an inner upper part of the abutment insertion groove (211).

2. The coupling structure between an abutment and a crown for an implant of claim 1, wherein the support step (12) has a fitting part (122) disposed at an edge of a horizontal part (121), and the fitting part (122) is formed so that a lower angle of inclination (α) toward an inside of the abutment body (11) with respect to a vertical direction is in a range of 0 to 6°, and a lower part height (H) is in a range of 1 to 2 mm.

3. The coupling structure between an abutment and a crown for an implant of claim 1, wherein the crown support guide (13) has a width (W) that gradually narrows in an upward direction from a lower part at which the support step (12) is formed, and the width (W) is formed so that an upper angle of inclination (α') toward the inside of the abutment body (11) with respect to a vertical direction is in a range of 0 to 6°, and an upper part height (H') is in a range of 2 to 4 mm.

4. The coupling structure between an abutment and a crown for an implant of claim 1, wherein the crown (20) is formed of zirconia, the impact-absorbing layer (23) has a fine concave-convex layer (231) formed by etching at an inner surface of the abutment insertion groove (211), a primer layer (232) is formed by a primer being applied to the fine concave-convex layer (231), and a resin layer (233) is applied to the primer layer (232).

5. The coupling structure between an abutment and a crown for an implant of claim 1 or 4, wherein the impact-absorbing layer (23) has the same width (W') as the width (W) of the crown support guide (13).

6. The coupling structure between an abutment and a crown for an implant of claim 1 or claim 4, wherein the crown (20) has a contact part (25) formed at a part at which the crown (20) abuts another neighboring crown, the contact part (25) has a contact insertion groove (251) that is formed in the crown (20) by etching, and a contact resin (252) is inserted into the contact insertion groove (251).
